# EUROPÄISCHE PATENTSCHRIFT

(11) **EP 1 230 064 B1**
(45) Veröffentlichungstag und Bekanntmachung des Hinweises auf die Patenterteilung: **07.04.2010**
(21) Anmeldenummer: 00993108.0
(22) Anmeldetag: 17.11.2000
(51) Int. Cl.: B23K 20/12

(54) **Verfahren ZUM VERBINDEN VON WENIGSTENS ZWEI WENIGSTENS IM VERBINDUNGSBEREICH ANEINANDERLIEGENDEN WERKSTÜCKEN NACH DER METHODE DES REIBRÜHRSCHWEISSENS**
Method FOR JOINING BY FRICTION STIR WELDING AT LEAST TWO WORKPIECES THAT ADJOIN AT LEAST IN THE CONTACT ZONE
Méthode D'ASSEMBLAGE D'AU MOINS DEUX PIECES AU MOINS ADJACENTES AU NIVEAU DE LA ZONE D'ASSEMBLAGE SELON LE PROCEDE DE SOUDURE PAR FRICTION ET MELANGE

(30) Priorität: 18.11.1999 DE 19956963
(43) Veröffentlichungstag der Anmeldung: 14.08.2002
(73) Patentinhaber: GKSS-Forschungszentrum Geesthacht GmbH, 21502 Geesthacht (DE)
(72) Erfinder: SCHILLING, Christoph, 21483 Lütau (DE); DOS SANTOS, Jorge, Dr., 21335 Lüneberg (DE)
(74) Vertreter: UEXKÜLL & STOLBERG
(86) Internationale Anmeldenummer: PCT/DE2000/004055
(87) Internationale Veröffentlichungsnummer: WO 2001/036145

(56) Entgegenhaltungen:
- WO-A-98/04381
- PATENT ABSTRACTS OF JAPAN vol. 1998, no. 11, 30. September 1998 (1998-09-30) -& JP 10 166165 A (AMADA CO LTD;AMADA ENG CENTER:KK), 23. Juni 1998 (1998-06-23)

## Beschreibung

Die Erfindung betrifft ein Verfahren zum Verbinden von wenigstens zwei wenigstens im Verbindungsbereich aneinanderliegenden Werkstücken nach der Methode des Reibrührschweißens, gemäß Oberbegriff des Patentanspruchs 1.

In der EP-B-0 615 480 ist das seit einigen Jahren bekannte Reibrührschweißen, vielfach aus kurz FSW (Friction Stir Welding) genannt, beschrieben und durch die dort dargelegte Maßnahmen weiterentwickelt worden.

Ursprünglich wurde das Reibschweißen derart ausgeführt, daß zwei Werkstücke, die miteinander durch Reibschweißung verbunden werden sollen, gegeneinander im gewünschten Verbindungsbereich bewegt werden und dabei mit einer voreinstellbaren Kraft gegeneinander gedrückt werden. Durch die durch die Reibung entstehende Wärme erfolgt letztlich eine Plastifizierung des Werkstoffs der Werkstücke in dem Verbindungsbereich. Ist der Werkstoff ausreichend plastifiziert, kann eine zumindest im oberflächennahen Bereich der Verbindungsstelle ausreichende Durchmischung der Werkstoffe beider Verbindungsstücke erfolgen, so daß bei Abkühlung die gewünschte Schweißverbindung zwischen beiden Werkstücken ausgebildet wird.

Bei demeingangs genannten Verfahren wird ein stiftartiger Vorsprung von einem Antrieb bzw. einem Motor in geeignet große Rotation versetzt, an den Stirnbereich zweier zu verbindender, nahezu stoßartig aneinandergelegter Werkstücke angesetzt und der stiftartige Vorsprung wird geeignet geführt, was beispielsweise mit einer speziellen Führungsvorrichtung oder auch mit einem Roboter geschehen kann und zusätzlich beispielsweise in eine Translationsbewegung längs der Stoßkanten beider zu verbindender Werkstücke gesetzt. Ist nach Beginn des Schweißvorganges durch die infolge der Rotation des stiftartigen Vorsprungs mit dem Werkstoff der Werkstücke der angrenzende Werkstoffbereich erzeugte Reibungswärme mit dem Werkstoff der Werkstoff ausreichend plastifiziert, wird unter Aufrechterhaltung der Rotationsbewegung des stiftartigen Vorsprungs die Translationsbewegung längs der Stoßkante zwischen den beiden Werkstücken ausgeführt, so daß beispielsweise eine Längsnaht augebildet wird.

Es ist bekannt, daß zum Verbinden zweier oder mehrerer metallischer Werkstücke sogenannte Punktschweißverbindungen hergestellt werden können, die vielfach gegenüber Niet- oder auch Schraubverbindungen den Vorteil haben, daß zur Ausbildung der Punktschweißverbindung keine zusätzlichen Verbindungselemente (Niete, Schrauben und dgl.) verwendet werden müssen und daß die Punktschweißverbindung den Vorteil hat, daß die Ausbildung einer Punktschweißverbindung schneller vonstatten gehen kann, da keine die Niete bzw. die Schrauben aufnehmenden, die Werkstücke durchquerenden Bohrungen ausgebildet werden müssen, durch die die Niete bzw. die Schrauben hindurchgesteckt und dann, durch die Ausbildung eines Nietkopfes bzw. das Verschrauben mit einer Mutter, gegeneinander gedrückt werden müssen.

Während die Ausbildung einer Punktschweißverbindung zweier aufeinanderliegender zu verbindender Werkstücke aus Eisen bzw. Stahl einschließlich seiner Legierungen mehr oder weniger unproblematisch mit handelsüblichen, eingeführten Punktschweißvorrichtungen durchgeführt werden kann, ist die Ausbildung einer Punktschweißverbindung bei zwei oder mehreren aneinanderliegenden, zu verbindenden Werkstücken aus Aluminium bzw. Aluminiumlegierungen, wie sie beispielsweise im Flugzeugbau oder auch im Kraftfahrzeugbau Verwendung finden, bisher mittels der elektrisch betriebenen handelsüblichen, eingeführten Punktschweißvorrichtungen nach wie vor problematisch. Das hat seinen Grund darin, daß Aluminium bzw. Aluminiumlegierungen mit dem Sauerstoff der Umgebungsluft im Oberflächenbereich eine äußerst hinderliche Oxidschicht bilden, die einerseits einen beträchtlichen elektrischen Widerstand zwischen den zu verbindenden Werkstücken bildet und zudem in dem bei der Ausführung der Punktschweißverbindungen entstehenden plastifizierten Bereich der Werkstücke enthalten ist, so daß Störungen aus Aluminiumoxid in dem Bereich der zu verbindenden Werkstücke eingelagert sind. Das führt dazu, daß die an sich im Idealfall gute Punktschweißverbindungen herkömmlicher Art, insbesondere bei zu verbindenden Werkstücken aus Aluminium bzw. Aluminiumlegierungen nicht die Festigkeit zeigen, die in vielen Verbindungsfällen unabdingbar erforderlich sind.

Aus diesem Grunde ist insbesondere im Flugzeugbau, wo es bekanntermaßen auf allerhöchste Verbindungsgüten bei der Verbindung von Werkstücken ankommt, trotz vielfältiger Versuche und trotz des tatsächlich auch erfolgten Einsatzes von Punktschweißverbindungen herkömmlicher Art zur Ausbildung der erwähnten Nietverbindungen zwischen zu verbindenden Werkstücken zurückgegangen worden. Gleiches gilt auch für die Kraftfahrzeugindustrie, in der in zunehmendem Maße auch Aluminiumkonstruktionen im Chassis- und Karosseriebereich eingesetzt werden.

Es ist zudem bekannt, daß insbesondere auch im Kraftfahrzeugbau in zunehmendem Maße Fertigungsroboter eingesetzt werden, die die vielfältigsten Montagearbeiten einschließlich der Ausbildung von Verbindungen zwischen zu verbindenden Werkstücken übernehmen. Die Fertigungsroboter führen dabei die an ihren Werkzeugköpfen für den jeweiligen Fertigungsvorgang angebrachten und benötigten Spezialwerkzeuge bzw. Spezialeinrichtungen an den Ort der auszuführenden Fertigungstätigkeit, wobei dann die mitgeführten Spezialeinrichtungen bzw. Spezialwerkzeuge die eigentliche Fertigungstätigkeit, beispielsweise das Verbinden zweier oder mehrerer Werkstücke, ausführen. Derartige speziell auf den gewünschten Fertigungsvorgang ausgebildete Einrichtungen, die im Zusammenwirken mit Fertigungsrobotern arbeiten, sind bisher für die Ausbildung von herkömmlichen Punktschweißverbindungen, die mittels elektrisch betriebener herkömmlicher Punktschweißvorrichtungen erzeugt werden, nur im Zusammenhang mit der Ausbildung von Punktschweißverbindungen zwischen Werkstücken aus Eisen bzw. Stahl im Kraftfahrzeugbau, d.h. im wesentlichen zwischen Eisen- bzw. Stahlblechen, konstruiert worden und zum Einsatz gekommen, wohingegen diese aufgrund der oben erwähnten Nachteile bei Werkstücken aus Aluminium bzw. Aluminiumlegierungen, wie sie in zunehmendem Maße neuerdings auch im Kraftfahrzeugbau verwendet werden sollen bzw. schon verwendet werden, bisher keinen Eingang gefunden haben. Hinzu kommt noch, daß bisher davon ausgegangen worden war, daß das oben beschriebene Reibschweißrührverfahren für die Ausbildung von quasi punktförmigen Verbindungen unter Zuhilfenahme der Methode des Reibruhrschweißens nicht möglich erschien.

Die JP10166165 offenbart eine Einrichtung zum Verbinden von wenigstens zwei, wenigstens im Verbindungsbereich aneinander liegenden Werkstücken nach der Methode des Reibrührschweißens. Sie weist eine rotierend antreibbare Achse auf, an deren vom Antrieb abgewandtem Ende ein stiftartiger Vorsprung ausgebildet ist, der bei seiner Rotation in Kontakt mit dem Verbindungsbereich der Werkstücke diese wenigstens im Kontaktbereich plastifiziert. Dabei ist ein Führungsmittel vorgesehen, das den stiftartigen Vorsprung zur Ausführung einer im wesentlichen punktförmigen Reibschweißverbindung längs einer vorgebbaren Strecke auf dem Werkstück führen kann. Das Führungsmittel ist dazu ein Schwenkarm, der um eine Achse schwenkbar ist, die im wesentlichen parallel zur Achse des stiftartigen Vorsprungs verläuft.

Die WO98/04381 offenbart ein Verfahren zum Verbinden eines plastifizierbaren Werkstücks mit einem anderen Werkstück mit Hilfe eines rotierenden Stempels als Reibelement, wobei der Stempel nur auf und ab bewegt wird.

Aufgabe der Erfindung ist es, ein Verfahren zum Verbinden von zwei Werkstücken nach der Methode des Reibrührschweißens zu schaffen, mit dem eine hochfeste und hochbelastbare im wesentlichen punktförmige Verbindung zwischen zu verbindenden metallischen und auch nichtmetallischen Werkstücken auf einfache Weise möglich ist, die mit hoher Präzision und reproduzierbar auf einfache Weise an eine vorgegebene Menge der Werkstücke zur Ausbildung einer diese gemeinsam verbindenden quasi punktförmigen Verbindungen angepaßt werden kann, die geeignet ist, wenigstens im wesentlichen werkstoffoxidfreie Verbindungen auszubilden und das quasi kontinuierlich auf einfache Weise betrieben werden kann.

Gelöst wird die Aufgabe gemäß der Erfindung durch die Merkmale des Patentanspruchs 1.

Der Vorteil des erfindungsgemäßen Verfahrens besteht im wesentlichen darin, daß mit ihm Verbindungen zweier oder mehrerer Werkstücke ausbildbar sind, die quasi punktförmig unter Heranziehung der Methode des Reibrührschweißens erzeugt werden können, wie es bisher nur mit herkömmlichen, elektrisch betriebenen Punktschweißvorrichtungen möglich war, die aber aufgrund der oben beschriebenen Nachteile für bestimmte Werkstoffe, insbesondere Aluminium und Aluminiumlegierungen, nur in bisher sehr beschränktem Maße Anwendung finden konnten. Durch die erfindungsgemäße Lösung ist es möglich geworden, bei Werkstücken aus den bisher elektrischen Punktschweißverfahren nur in geringem Maße zugänglichen Werkstoffen, wie Aluminium und Aluminiumlegierungen, quasi punktförmigen Verbindungen zu schaffen, die keine weitere Vorbereitung des Verbindungsortes erfordern. Es müssen keine Löcher in den Werkstoffen gebohrt werden, es sind keine zusätzlichen Verbindungsmittel erforderlich, es ist kein gesonderter Arbeitsvorgang, wie beispielsweise die Ausbildung eines Nietkopfes oder das Verschrauben einer Schraubverbindung mit einer Mutter und dgl., erforderlich, und es besteht aufgrund der konstruktiven Ausgestaltung der Einrichtung die Möglichkeit, auch absolut punktförmige Schweißverbindungen nach der Methode des Reibrührschweißens auszubilden und die weitere Möglichkeit, die Verbindung längs einer vorwählbaren kurzen Schweißverbindungsstrecke auszuführen, entsprechend der Steuerung der Bewegung der Führung, die den stiftartigen Vorsprung, der den Reibrührschweißvorgang bewirkt, führend bewegt.

Gemäß einer vorteilhaften Ausgestaltung der Einrichtung zur Durchführung des Verfahrens ist das Führungsmittel derart ausgestaltet, daß das Führungsmittel ein um eine im wesentlichen parallel zur Achse des stiftartigen Vorsprungs drehbarer Schwenkarm ist. Der an sich starr ausgebildete Schwenkarm führt den stiftartigen Vorsprung, wobei dieser dabei vorteilhafterweise derart ausgestaltet sein kann, daß der Schwenkarm bei der Ausführung der Reibschweißverbindung eine kreisabschnittförmige Bewegung ausführt.

Es ist vorteilhaft, die kreisabschnittförmige Strecke der Bewegung derart zu bemessen, daß sie im wesentlichen der Ausdehnungsstrecke der Reibschweißverbindung entspricht.

Zur Ausführung der Drehbewegung des Schwenkarmes, an dessen Spitze, wie erwähnt, der stiftartige Vorsprung angeordnet ist und angetrieben wird, kann es vorteilhaft sein, einen gesonderten Aktuator vorzusehen, um diese Bewegung einrichtungsseitig selbst vorzunehmen und einen möglicherweise mit der Einrichtung zusammenarbeitenden Fertigungsroboter dazu nicht steuern und antreiben zu müssen. Dazu ist vorteilhafterweise als Aktuator eine an der Einrichtung angeordnete Kolben-Zylindereinrichtung vorgesehen, mittels der die Bewegung des stiftartigen Vorsprungs längs der Strecke auf dem Werkstück bzw. relativ zu den Werkstücken bewirkbar ist. Es ist aber auch möglich, anstelle einer pneumatisch bzw. hydraulisch betriebenen Kolben-Zylindereinrichtung einen elektromechanisch betriebenen Aktuator vorzusehen, der beispielsweise mittels eines Motors angetrieben werden kann.

Um sicherzustellen, daß zum Augenblick der Ausbildung der quasi punktförmigen Schweißverbindung die zu verbindenden Werkstücke mit hoher Präzision aneinander gedrückt werden können, so daß sie sich weder relativ zueinander noch relativ zum als stiftartiger Vorsprung ausgebildeten Schweißwerkzeug bewegen können, ist vorteilhafterweise bei der Einrichtung ein Spannhebel vorgesehen, mit dem die Werkstücke aneinandergedrückt und gegen ein Gegenlager drückbar sind.

Dieses Aneinanderdrücken und Drücken auf ein Gegenlager kann vorteilhafterweise wieder mittels eines einrichtungseigenen Aktuators vorgenommen werden, der ebenfalls vorzugsweise als Kolben-Zylindereinrichtung ausgebildet sein kann, mit der der Spannhebel in seine die Werkstücke einspannende Stellung und aus dieser heraus bewegbar ist. Auch hier gilt wieder, daß der Aktuator nicht zwingend als eine pneumatisch bzw. hydraulisch betriebene Kolben-Zylindereinrichtung ausgebildet sein muß, vielmehr kann auch hierfür beispielsweise eine motorbetriebene elektromechanische Aktuatoreinrichtung vorgesehen sein.

Um ein in allen Betriebszuständen und bei allen Gesamtdicken der zu verbindenden Werkstücke fortwährend orthogonalen, ggf. um einen Winkel von ca. 3° geneigtes Aufsetzen des stiftartigen Vorsprungs auf das Werkstück relativ zur Oberfläche dies Werkstücks wenigstens im Bereich des Ortes zu gewährleisten, an dem der stiftartige Vorsprung in Kontakt mit der Oberfläche des dazu nächsten Werkstücks kommt, ist das Kopfelement vorteilhafterweise mittels voneinander beabstandeter, bügelförmig ausgebildeter Schwenkelemente bewegbar, wobei die Schwenkelemente zusammen mit dem Kopfelement und einem Drehelement, das um eine Drehachse des Schwenkarms drehbar ist, eine im wesentlichen parallelogrammförmige Struktur bilden. Somit ist gewährleistet, daß sich der gewählte Winkel der Achse des schriftförmigen Vorsprungs relativ zu den zu verbindenden Werkstücken nicht verändern kann.

Schließlich ist auch das Kopfelement vorteilhafterweise über einen einrichtungseigenen Aktuator bewegbar, der ebenfalls als pneumatisch bzw. hydraulisch betriebene Kolben-Zylindereinrichtung ausgebildet sein kann, aber auch beispielsweise in Form eines motorbetriebenen elektromechanischen Aktuators.

Bei Verwendung der hier vorgeschlagenen Einrichtung im Zusammenwirken mit einem Fertigungsroboter verbleibt beim Fertigungsroboter lediglich die Aufgabe, die Einrichtung an den Ort zu überführen und dort zu positionieren, wo die punktförmige bzw. quasi punktförmige Schweißverbindung bei den zu verbindenden Werkstücken ausgeführt werden soll.

Die Erfindung wird nun unter Bezugnahme auf die nachfolgender schematischen Zeichnungen anhand eines Ausführungsbelspieles im einzelnen beschrieben. Darin zeigen:

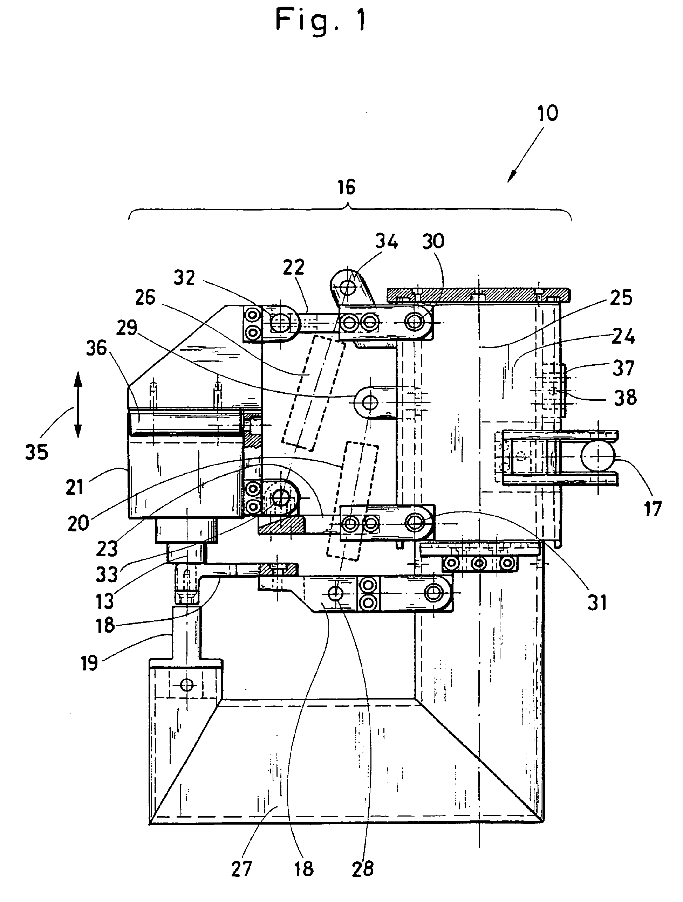

- Fig. 1: Vorderansicht einer Einrichtung zur Durchführung der Erfindung,
- Fig. 2: eine Draufsicht der in Fig. 1 dargestellten Einrichtung unter Weglassung von Einzelheiten,
- Fig. 3: eine Ansicht von der Seite der in Fig. 1 darge- stellten Einrichtung unter Weglassung von Einzelheiten,
- Fig. 4: eine Darstellung eines Ausschnittes der Ein- richtung, ein erstes unteres Schwenkelement darstellend,
- Fig. 5: eines Ausschnittes der Einrichtung, ein zweites oberes Schwenkelement darstellend,
- Fig. 6: eine Teilansicht auf das Kopfelement der Ein- richtung unter Weglassung von Einzelheiten,

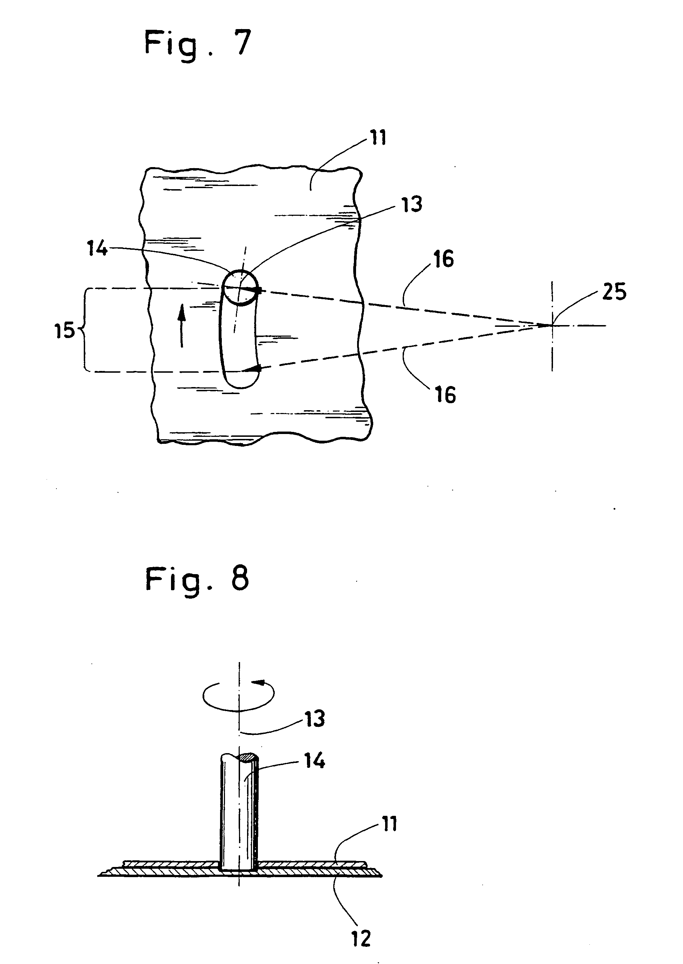

- Fig. 7: eine Draufsicht auf eine erfindungsgemäß ausgebildete gering kreisabschnittförmige Punktschweißung, und
- Fig. 8: eine Seitenansicht von Fig. 7.

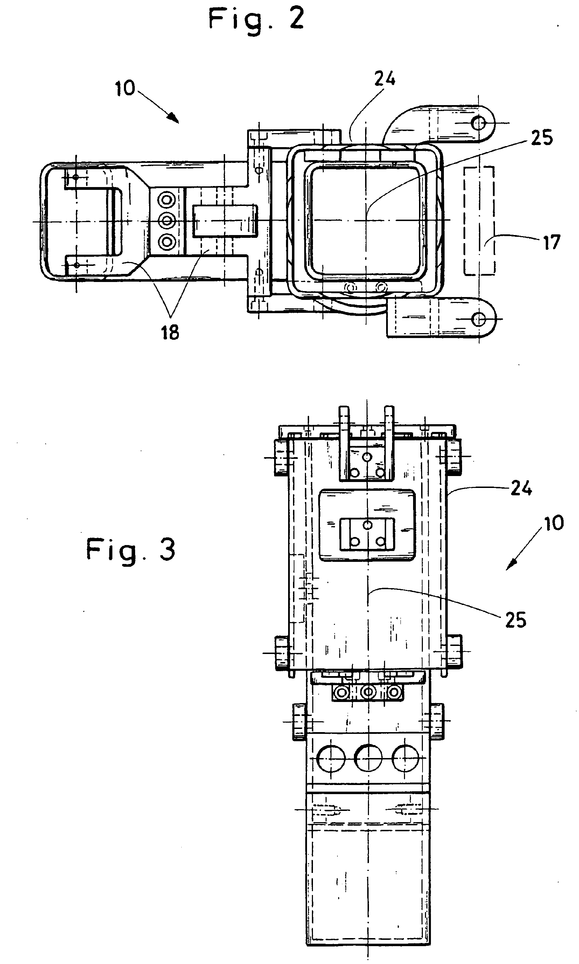

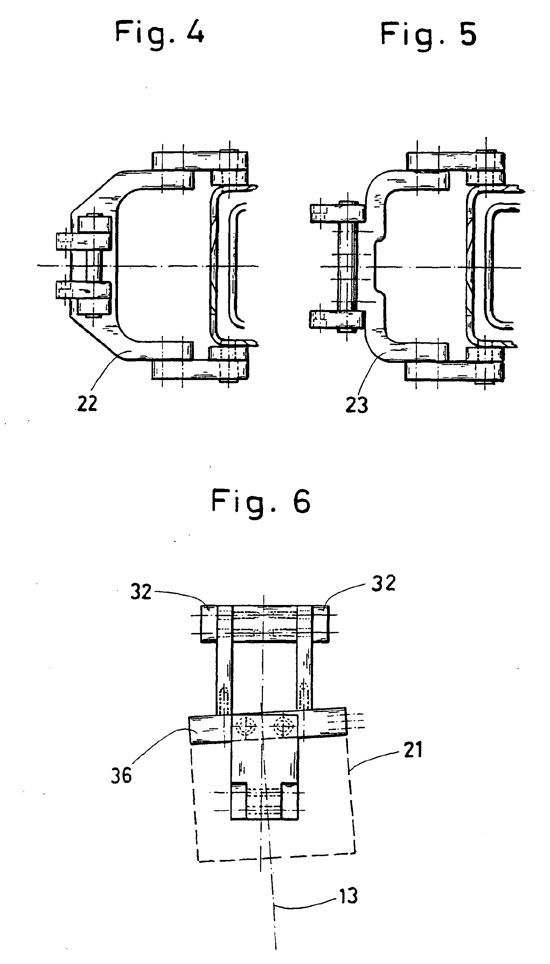

Zur Beschreibung der Einrichtung 10 wird auf die Figuren Bezug genommen. Die Einrichtung 10 umfaßt ein Kopfelement 21, in dem eine Antriebseinrichtung angeordnet sein kann, in die eine Reibrührschweißvorrichtung (im einzelnen nicht dargestellt) aufgenommen werden kann. Die Reibrührschweißvorrichtung weist im wesentlichen einen stiftartigen Vorsprung 14 auf, der durch die im Kopfelement 21 ausgebildete Antriebseinrichtung in Rotation versetzt wird, um Werkstücke 11, 12 durch eine punktförmige oder quasi punktförmige Reibrührschweißverbindung zu verbinden, worauf noch weiter unten eingegangen wird. Das Kopfelement 21 ist über ein erstes oberes Schwenkelement 22 und ein zweites unteres Schwenkelement 23, vgl. auch die Figuren 4 und 5, mit einem Drehelement 24 verbunden, das um eine Achse 25 drehbar ist. Ein unteres Teil 27 der unteren hakenförmigen Struktur der Einrichtung 10 ist feststehend ausgebildet, wobei das Drehelement 24 sich um die Drehachse 25 relativ zum feststehenden unteren Teil 27 drehen kann. Die Drehung wird durch einen Aktuator bewirkt, der hier in Form einer hydraulisch oder pneumatisch betriebenen Kolben-Zylindereinrichtung 17 ausgebildet ist, vgl. auch Fig. 2, und entsprechend eines vorwählbaren Kreisabschnittes bzw. einer Strecke 15, die der gewünschten "Länge" der quasi punktförmigen Schweißverbindung der Werkstücke 11, 12 entspricht, verschwenkt werden kann.

An dem feststehenden unteren Teil 27 der Einrichtung 10 ist ein Spannhebel 28 drehbar befestigt, der mittels eines Aktuators, der hier ebenfalls als hydraulisch bzw. pneumatisch betätigbare Kolben-Zylindereinrichtung 20 ausgebildet sein kann, betätigbar ist. Am Spannhebel 18 greift die Kolben-Zylinder-Einrichtung 20 drehbar in eine Öse 28 und am entgegengesetzten Ende drehbar in eine Öse 29, die an einer verlängerten, feststehenden Struktur des oberen Teiles 27 befestigt ist, die vom Drehelement 24 umhüllt ist.

Im wesentlichen in Verlängerung der Achse 13 des stiftartigen Vorsprungs 14 ist ein Gegenlager 19 am feststehenden unteren Teil 27 der Einrichtung 10 angeordnet. Die zu verbindenden Werkstücke 11, 12 werden, auf dem Gegenlager 19 zunächst positioniert und durch den Spannhebel 18 aufgrund einer geeigneten Steuerung bzw. Bewegung der Kolben-Zylindereinrichtung 20 auf das Gegenlager 19 gedrückt.

Das Kopfelement 21 bildet zusammen mit den beiden Schwenkelementen 22, 23 und dem Drehelement 24 eine parallelogrammförmige Struktur, wobei die beiden Schwenkelemente 22, 23 am Drehelement 24 über dortige Drehpunkte bzw. Ösen 30, 31 befestigt sind und am Kopfelement 21 über dortige Drehpunkte bzw. Ösen 32, 33 drehbar befestigt sind. Ein ebenfalls als Kolben-Zylindereinrichtung 26 augebildeter Aktuator, der zwischen einer Öse 34, wo er drehbar gelagert ist und beispielhaft der Öse 33, wo er ebenfalls drehbar gelagert ist, wirkt, bewirkt durch geeignete hydraulische oder pneumatische Steuerung ein Absenken bzw. ein Anheben des Kopfelementes 21 in Richtung des Pfeiles 35. Durch gesteuerte Bewegung der Kolben-Zylindereinrichtung 26 kann somit das Kopfelement 21 und der dort angeordnete stiftartige Vorsprung 24 auf die zu verbindenden Werkstücke 11, 12 abgesenkt und von diesen abgehoben werden.

Das Kopfelement 21, in Fig. 6 gestrichelt dargestellt, ist in Bewegungsrichtung des stiftartigen Vorsprungs bzw. relativ zur Achse 13 des stiftartigen Vorsprungs um ca. 3 geneigt, was zur Ausführung einer Schweißverbindung nach dem Reibrührschweißverfahren ggf. nötig ist.

Eine quasi punktförmige Schweißverbindung zwischen zwei Werkstücken 11, 12 wird mit der Einrichtung 10 folgendermaßen hergestellt: Ein hier nicht dargestellter Fertigungsroboter oder auch eine andere geeignete Fertigungseinrichtung verbringt die Einrichtung 10 an den Ort, an dem die Verbindung ausgeführt werden soll. Nachfolgend wird mittels eines im Kopfelement 21 angeordneten Antriebs der stiftartige Vorsprung auf an sich bekannte Weise in Rotation versetzt. Zuvor ist das Drehelement 24 über die Kolbenzylindereinrichtung 17 in eine Ausgangsstellung gebracht worden, d.h. das Drehelement 24 liegt beispielsweise an einem Anschlag 37 an, wobei der Anschlag 37 über eine Stellschraube 38 geeignet positioniert werden kann. Ebenfalls zuvor ist mittels der Kolben-Zylindereinrichtung 26 das Kopfelement 21 maximal angehoben worden, so daß der stiftartige Vorsprung 14 (Schweißwerkzeug) maximal abgehoben ist. Ebenfalls ist zuvor die Kolben-Zylindereinrichtung 20 betätigt worden, so daß der Spannhebel 28 sich in maximal abgehobener Stellung befindet.

Dann wird beispielsweise mittels des erwähnten Fertigungsroboters die Einrichtung 10 unmittelbar an den Ort gebracht, wo die Verbindung zwischen den Werkstücken 11, 12 hergestellt werden soll. Die beabsichtigte Verbindungsstelle liegt dann unmittelbar oberhalb des Gegenlagers 19. Über die Kolben-Zylindereinrichtung 20 wird nun der Spannhebel 18 unter Einschluß der beiden dazwischenliegenden Werkstücke 11, 12 derart bewegt, daß zwischen dem Spannhebel 18 und dem Gegenlager 19 die zu verbindenden Werkstücke 11, 12 unverrückbar relativ zueinander und unverrückbar relativ zum stiftartigen Vorsprung 14 aneinanderliegen. Nachfolgend wird über die Kolben-Zylindereinrichtung 26 das Kopfelement 21 in Richtung des Pfeiles 35 auf die zwischen Zwischenspannhebel 18 und Gegenlager 19 eingespannten Werkstücke 11, 12 zu bewegt. Dabei berührt der stiftartige Vorsprung 14 das erste, in den Fig. das obere, Werkstück 11 mit einem vorbestimmbaren, einstellbaren Druck. Die Bewegung der Kolben-Zylindereinrichtung 26 wird dann beendet, so daß nachfolgend die punktförmige Schweißverbindung ausgeführt werden kann. Soll die punktförmige Schweißverbindung auch eine vorbestimmbare "Länge" haben, wird die Kolben-Zylindereinrichtung 27 in Betrieb gesetzt, so daß der Schwenkarm 26, an dem das Kopfelement 21 mit dem rotierend angetriebenen Vorsprung 14 angeordnet ist, um die Drehachse 25 bewegt wird. Die sich ergebende kreisabschnittsförmige Bewegung des stiftartigen Vorsprungs 14 ergibt eine entsprechend kreisabschnittförmige noch quasi punktförmige Schweißnaht, die entweder geeignet gesteuert oder durch den erwähnten Anschlag 37 in ihrer Längenausdehnung begrenzt wird. D.h. mit anderen Worten, daß der maximale Drehwinkel des Schwenkarms 15 die Länge bzw. Strecke 15 der Schweißnaht bestimmt.

Nachdem der Schweißvorgang beendet ist, wird die Kolben-Zylindereinrichtung 26 betätigt, so daß das Kopfelement 21 und somit auch der stiftartige Vorsprung 14 von den miteinander verbundenen Werkstücken 11, 12 abhebt. Die Kolben-Zylindereinrichtung 17 wird wieder in ihre Ausgangssstellung zurückgeführt, so daß auch das Kopfelement 21 mit dem stiftartigen Vorsprung 14 wiederum in die Ausgangsstellung zurückgeht. Gleichzeitig oder geringfügig später wird die Kolben-Zylindereinrichtung 20 betätigt, so daß der Spannhebel 18 von den Werkstücken 11, 12 abhebt und damit die verbundenen Werkstücke 11, 12 freigibt.

Der Fertigungsroboter kann nun die Einrichtung 10 an den nächsten gewünschten Ort überführen, wo die nächste Verbindung ausgeführt werden soll.

### Bezugszeichenliste

- 10: Einrichtung
- 11: Werkstück
- 12: Werkstück
- 13: Achse
- 14: stiftartiger Vorsprung
- 15: Strecke
- 16: Schwenkarm
- 17: Kolben-Zylinder-Einrichtung (Bewegungsstrecke)
- 18: Spannelement
- 19: Gegenlager
- 20: Kolben-Zylinder-Einrichtung (Spannhebel)
- 21: Kopfelement
- 22: erste Schwenkelement
- 23: zweite Schwenkelement
- 24: Drehelement
- 25: Drehachse (Schwenkarm)
- 26: Kolben-Zylinder-Einrichtung (Kopf)
- 27: unteres Teil
- 28: Öse
- 29: Öse
- 30: Öse
- 31: Öse
- 32: Öse
- 33: Öse
- 34: Öse
- 35: Pfeil
- 36: Flansch
- 37: Anschlag
- 38: Stellschraube

## Patentansprüche

1. Verfahren zum Verbinden von wenigstens zwei wenigstens im Verbindungsbereich aneinanderliegenden Werkstücken nach der Methode des Reibrührschweißens, wobei eine rotierend antreibbare Achse vorgesehen ist, an deren antriebsabgewandtem Ende ein stiftartiger Vorsprung (14) ausgebildet ist, der bei seiner Rotation in Kontakt mit dem Verbindungsbereich der Werkstücke diese wenigstens im Kontaktbereich plastifiziert, **dadurch gekennzeichnet, daß** der stiftartige Vorsprung (14) zur Ausführung einer kurzen, im wesentlichen punktförmigen, kreisabschnittsförmigen Schweißverbindungsstelle längs einer vorgebbaren Strecke (15) auf dem Werkstück geführt wird, und dass das Führungsmittel als drehbarer Schwenkarm (16) um eine Achse gedreht wird, die im wesentlichen parallel zur Achse (13) des stiftartigen Vorsprungs (14) verläuft.

2. Verfahren nach Anspruch 1, **dadurch gekennzeichnet, daß** die kreisabschnittförmige Strecke (15) der Bewegung im wesentlichen der Ausdehnungsstrecke der Reibrührschweißverbindung entspricht.

## Claims

1. Method of joining at least two work pieces contacting each other at least in the joining area, said joining being done by friction stir welding, wherein a rotatingly driven shaft is provided which has a pin-like protrusion (14) formed at the end remote from the driven end, said pin plasticizing the work pieces at least in the contact area when making contact by rotation in the joining area, **characterized in that** the pin-like protrusion (14) is guided along a predetermined distance (15) upon the work piece to generate a brief substantially point-shaped welding connection portion which has the shape of a section of a circle, and that the guiding means is rotated about an axis as a rotatable swivel arm (16), said axis extending substantially parallel to the axis (13) of the pin-like protrusion (14).

2. Method according to claim 1, **characterized in that** the section-of-a-circle distance (15) corresponds substantially to the length of the friction stir welding joint.

## Revendications

1. Procédé d'assemblage d'au moins deux pièces à usiner au moins adjacentes dans au moins la zone d'assemblage selon la méthode de soudure par friction et mélange, un axe pouvant être entraîné en rotation étant prévu à l'extrémité duquel, extrémité qui est opposée à l'entraînement, une saillie de type goupille (14) est configurée qui, lors de sa rotation en contact avec la zone d'assemblage des pièces à usiner, plastifie celles-ci au moins dans la zone de contact, **caractérisé en ce que** la saillie de type goupille (14) est guidée sur la pièce à usiner le long d'une distance qui peut être prédéfinie (15) pour exécuter un endroit d'assemblage par soudure court en forme de segment de cercle, substantiellement en forme de point et que le moyen de guidage est rotatif, en tant que bras de pivotement rotatif (16), autour d'un axe qui est substantiellement parallèle à l'axe (13) de la saillie de type goupille (14).

2. Procédé selon la revendication 1, **caractérisé en ce que** le parcours en forme de segment de cercle (15) correspond au mouvement substantiellement du parcours de dilatation de l'assemblage par soudure par friction.
